Europäisches Patentamt

European Patent Office

Office européen des brevets

(19)

(11) Veröffentlichungsnummer: **0 026 947**
**B1**

(12) **EUROPÄISCHE PATENTSCHRIFT**

(45) Veröffentlichungstag der Patentschrift:
28.09.83

(21) Anmeldenummer: **80200858.1**

(22) Anmeldetag: **12.09.80**

(51) Int. Cl.³: **F 16 M 7/00, F 01 D 25/28**

(54) Lagergehäuseabstützung für Turbomaschinen.

(30) Priorität: 03.10.79 CH 8911/79

(43) Veröffentlichungstag der Anmeldung:
15.04.81 Patentblatt 81/15

(45) Bekanntmachung des Hinweises auf die Patenterteilung:
28.09.83 Patentblatt 83/39

(84) Benannte Vertragsstaaten:
CH DE FR LI SE

(56) Entgegenhaltungen:
DE-A-2 642 590
DE-A-2 740 960
FR-A-2 385 031
GB-A-1 121 153
US-A-2 004 238
US-A-3 281 101
Der NEUERER, 15. May 1966, Berlin, DDR M. JUNGE
»Anwendung der Klebetechnik«, Seiten 204—206

(73) Patentinhaber: BBC Aktiengesellschaft Brown, Boveri &
Cie., Haselstrasse, CH-5401 Baden (CH)

(72) Erfinder: Dömer, Wolfgang, Guggimoos 395,
CH-5425 Schneisingen (CH)

Lagergehäuseabstützung für Turbomaschinen

Die Erfindung betrifft eine Lagergehäuseabstützung für Turbomaschinen gemäß Oberbegriff des Patentanspruchs 1.

Eine Abstützung dieser Art für Großmaschinen ist bekannt aus der DE-A-2 740 960. Da dort indessen die eigentlichen Elemente für die Vertikalverstellung nach endgültiger Positionierung der Maschine mit dem Fundament vergossen werden, ist ein nachträgliches vertikales Verstellen nicht mehr möglich. Abgesehen davon, daß eine horizontale Einstellung nicht vorgesehen ist, geschieht auch die Fixierung in horizontaler Richtung nur über Reibschluß, was bei den für Turbomaschinen üblichen Vibrationsbeanspruchungen ungenügend ist.

Der im Kennzeichen der Patentansprüche definierten Erfindung liegt deshalb die Aufgabe zugrunde, eine Lagerabstützung der eingangs genannten Art so zu verbessern, daß das Lagergehäuse jederzeit in allen Ebenen verstellbar und fixierbar ist.

Zwar ist es aus der DE-A-2 642 590 bekannt, zur horizontalen Fixierung eines Lagergehäuses die Horizontalkräfte über einen mit dem Lagergehäuse formschlüssigen Bolzen, der in das Fundament eingelassen ist, abzuleiten. Jedoch bietet diese Lösung keine Einstellmöglichkeit in der horizontalen Ebene. Da darüber hinaus die dortige verstärkte Bodenplatte direkt mit dem Fundament verspannt ist, ist auch eine vertikale Einstellung nach der endgültigen Aufstellung nicht möglich.

Auch die horizontale Einstellvorrichtung gemäß US-A-2 004 238 bietet sich im vorliegenden Falle nicht an, da hier die horizontalen Kräfte über vertikale Einstellelemente übertragen werden auf Fundamentplatten, die selbst nicht mit dem Fundament verankert sind. Deswegen ist die dortige kombinierte Vertikal- und Horizontalverstellung für Turbomaschinenlagerungen nicht geeignet, da sie die Grundvoraussetzung der absolut festen vertikalen Verspannung mit dem Fundament nicht erfüllt.

Neben dem Wegfall der Grundplatte und der dadurch verursachten Abstützung auf wenigen, definierten Punkten, wodurch das Ausrichten bei der Neumontage sowie das Nachrichten bei Revisionen wesentlich vereinfacht wird, ergibt sich der Vorteil, daß durch die gewählte Horizontalfixierung keine Wärmespannungen durch unterschiedliche Erwärmung des Lagergehäuses und des Fundamentes auftreten, welche letztere ein Verziehen der Auflageflächen hervorrufen könnten. Eine freie Dehnung in der Horizontalebene ist möglich und durch die Konfiguration der kraftaufnehmenden Teile wird infolge des kleinen Hebelarmes das auf diese Halteklötze einwirkende Biegemoment gering.

Gemäß einer vorteilhaften Ausbildung des Erfindungsgegenstandes besteht das Fundament aus Beton in das die Halteklötze eingegossen sind und mit dem die Fundamentplatten durch Verklebung verbunden sind.

Durch das Verkleben der Fundamentplatten mit dem Beton-Fundament unter Verwendung eines an sich bekannten Klebstoffes wird auf einfache Weise eine Befestigung dieser Fundamentplatten erzielt und durch die Kombination der Einstellelemente mit den Fundamentplatten erübrigt sich eine genaue Ausrichtung der Fundamentplatten.

Wenn das Fundament aus Stahl besteht empfiehlt es sich, die Fundamentplatten und Halteklötze auf einfache Weise und ohne besonderes Ausrichten durch Verschweißen damit zu verbinden.

Nach einer weiteren vorteilhaften Ausbildung sind die Angriffsflächen der Halteklötze für die Einstellbolzen als Vierkant ausgebildet.

Diese Ausbildung der Angriffsflächen ermöglicht die Verwendung einfacher Schrauben, welche als Einstellbolzen verwendet werden und eine Justierung der Lagerböcke in allen Ebenen ermöglichen.

In der Zeichnung ist ein Ausführungsbeispiel des Erfindungsgegenstandes in vereinfachter Form dargestellt.

Es zeigt:

Fig. 1 eine Draufsicht auf ein Lagergehäuse,

Fig. 2 einen Längsschnitt durch das Lagergehäuse entlang den Schnittlinien A-A in Fig. 1,

Fig. 2a eine Detailansicht eines Lagergehäuseteiles mit auf einer Stahlplatte aufgeschweißtem Halteklotz,

Fig. 3 einen weiteren Längsschnitt durch das Lagergehäuse entlang den Schnittlinien B-B in Fig. 1.

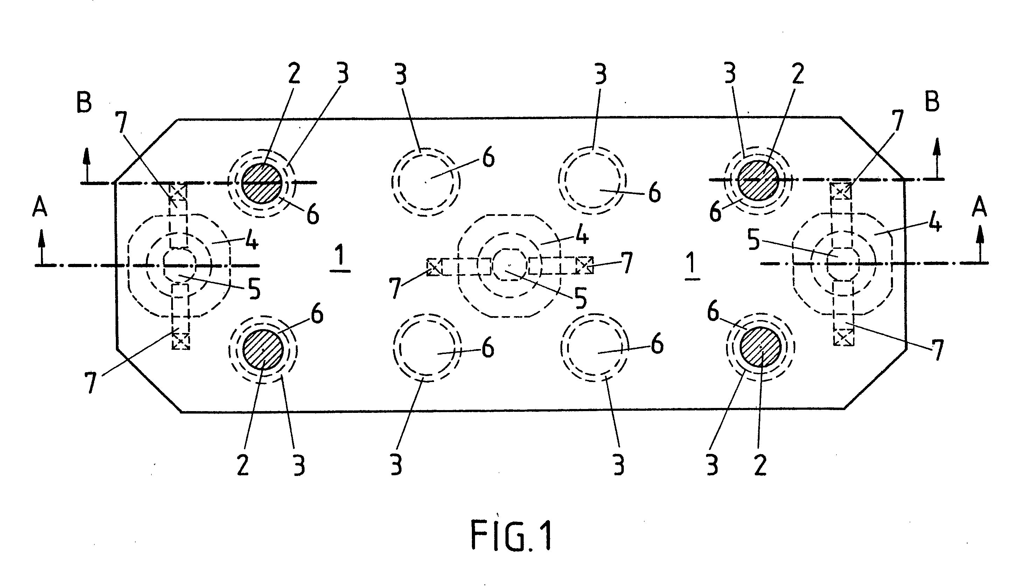

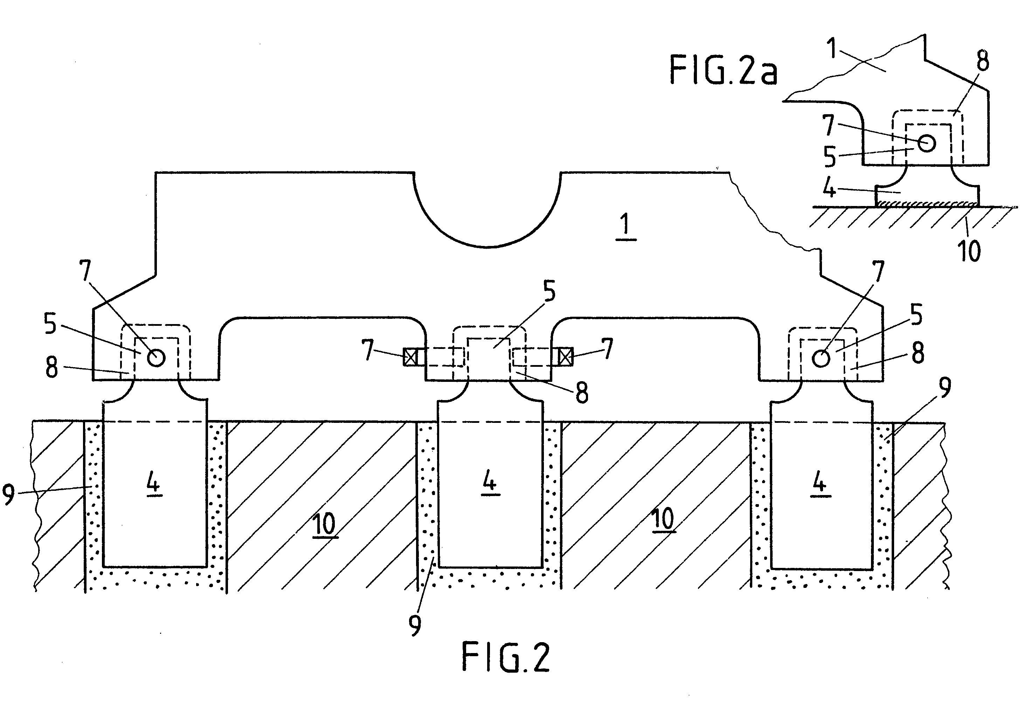

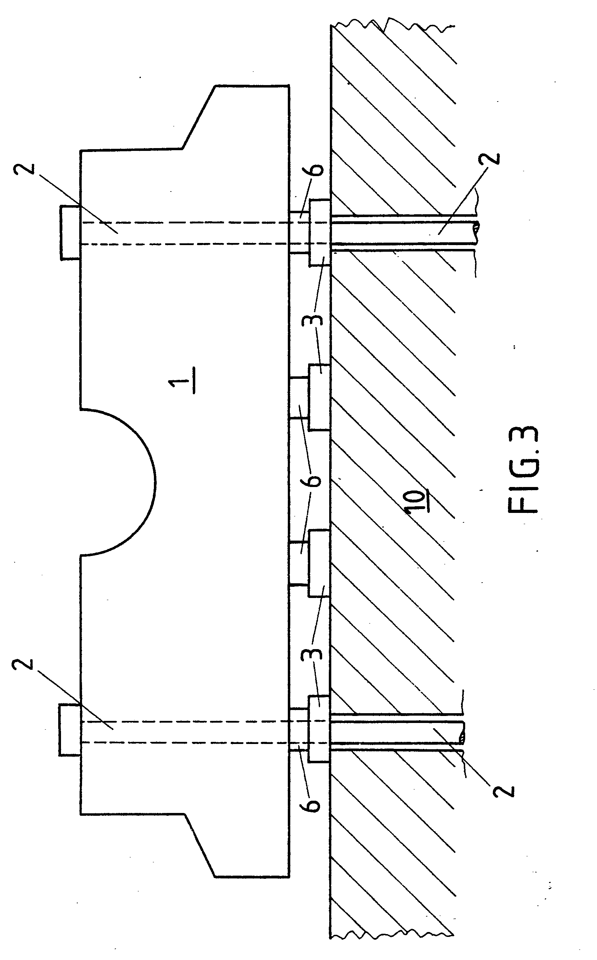

Gemäß Fig. 1 ist mit 1 ein Lagergehäuse bezeichnet, beispielsweise einer Tubomaschine, welches von Fundamentankern 2 durchdrungen wird. Die Fundamentanker 2 sind in einem Fundament 10 (Fig. 2 und 3) in bekannter Weise befestigt und fixieren das Lagergehäuse 1. Auf weiteren, genau definierten Punkten liegt das Lagergehäuse 1 auf Fundamentplatten 3 auf und ist durch auf Halteklötzen 4 angeordneten Fixierungen 5 einstellbar ausgebildet. Auf den Fundamentplatten 3 sind Gewindeeinstellscheiben 6 vorgesehen, mittels welchen das Lagergehäuse 1 in vertikaler Richtung ausgerichtet werden kann. An die Fixierungen 5 greifen Einstellbolzen 7 an, durch welche das Lagergehäuse 1 in horizontaler Richtung fixierbar und einstellbar ist.

In der Fig. 2 ist mit 1 wiederum das Lagergehäuse bezeichnet, welches an der dem Fundament zugekehrten Unterseite Aufnahmen 8, in welche die Fixierungen 5 der Halteklötze 4 hineinragen. Die Halteklötze 4 sind in Aussparungen 9 des Fundamentes 10 mittels eines besonderen Bindemittels, vorzugsweise eines Kunststoffmörtels eingegossen.

Bei der Ausbildungsform der Halteklötze 4 und des Fundamentes 10 gemäß der Fig. 2a sind die Halteklötze 4 auf das aus Stahl bestehende Fundament 10 aufgeschweißt, wodurch die Halteklötze 4 entsprechend kurz ausgebildet sein können.

In der Fig. 3 zeigt der Schnitt entlang der Schnittlinie B-B in Fig. 1 die auf das Fundament 10 aufgeklebten Fundamentplatten 3 mit den Gewindeeinstellscheiben 6, wobei die in der Zeichnung äußeren Fundamentplatten 3 von den Fundamentankern 2 durchdrungen werden, welche in bekannter Weise im Fundament 10 verankert werden können.

Durch die Kombination der auf das Fundament 10 aufgeklebten Fundamentplatten 3 mit deren Gewindeeinstellscheiben, sowie der mit Fixierungen 5 versehenen Halteklötze 4, wobei die Fixierungen 5 vorteilhafterweise als Vierkante ausgebildet sind, an welche die Einstellbolzen 7 angreifen, ist einmal eine einfache Montage der Lagergehäuse 1 möglich und zum anderen ist eine Verschiebbarkeit des Lagergehäuses 1 in allen Ebenen, beispielsweise ein leichtes Kippen, Verdrehen usw. auf einfache Weise möglich, ohne daß ein vorheriges, genaues Ausrichten gegenüber dem Fundament 10 erforderlich wird. Das Lagergehäuse 1 kann somit durch das Wegfallen der bisher üblichen Grundplatte auf wenigen, genau definierten Punkten befestigt werden, was insbesondere bei einem eventuellen Nachrichten bei Revisionen vorteilhaft ist. Gleichzeitig entfällt auch ein genaues Abrichten, beispielsweise Planschleifen der Unterseite des Lagergehäuses 1, und der Auflagefläche der Grundplatte.

Bezeichnungsliste

    1  =  Lagergehäuse
    2  =  Fundamentanker
    3  =  Fundamentplatten
    4  =  Halteklötze
    5  =  Fixierungen
    6  =  Gewindeeinstellscheiben
    7  =  Einstellbolzen
    8  =  Aufnahmen
    9  =  Aussparungen
   10  =  Fundament

## Patentansprüche

1. Lagergehäuseabstützung für Turbomaschinen, wobei das Lagergehäuse (1) sich unter Vermeidung einer Grundplatte direkt über Fundamentplatten (3) am Fundament (10) abstützt und mit Fundamentankern (2) fixiert ist, wobei die Fundamentplatten (3) mit Einstellelementen (6) für die vertikale Ausrichtung des Lagergehäuses (1) versehen sind, dadurch gekennzeichnet, daß die vertikalen Einstellelemente (6) oberhalb des Niveaus des Fundamentes (10) angeordnet sind und daß für die horizontale Einstellung und Fixierbarkeit des Lagergehäuses (1) Halteklötze (4) im Fundament (10) befestigt sind, mit Fixierungen (5), die in Aufnahmen (8) an der Unterseite des Lagergehäuses (1) hineinragen, wobei Einstellbolzen (7) an die Fixierungen (5) angreifen.

2. Lagergehäuseabstützung nach Anspruch 1, dadurch gekennzeichnet, daß das Fundament (10) aus Beton besteht, daß die Fundamentplatten (3) mit dem Fundament (10) durch Verklebung verbunden und daß die Halteklötze (4) in das Fundament (10) eingegossen sind.

3. Lagergehäuseabstützung nach Anspruch 1, dadurch gekennzeichnet, daß das Fundament (10) aus Stahl besteht und die Fundamentplatten (3) und Halteklötze (4) damit verschweißt sind.

4. Lagergehäuseabstützung nach Anspruch 1, dadurch gekennzeichnet, daß die Angriffsflächen der Halteklötze (4) für die Einstellbolzen (7) als Vierkant ausgebildet sind.

5. Lagergehäuseabstützung nach Anspruch 1, dadurch gekennzeichnet, daß die Fundamentanker (2) die Fundamentplatten (3) durchdringen.

## Claims

1. Support for a bearing housing of a turbine engine, the bearing housing (1) being supported directly on the foundation (10) via foundation plates (3), avoiding a base plate, and being fixed by means of foundation anchors (2), the foundation plates (3) being provided with adjusting elements (6) for the vertical alignment of the bearing housing (1), characterised in that the vertical adjusting elements (6) are located above the Level of the foundation (10) and that, for the horizontal adjustment and fixability of the bearing housing (1), holding blocks (4) are fixed in the foundation (10) and have fixings (5) which project into recesses (8) on the underside of the bearing housing (1), adjusting bolts (7) engaging in the fixings (5).

2. Support for a bearing housing according to claim 1, characterised in that the foundation (10) consists of concrete, that the foundation plates (3) are bonded to the foundation (10) by gluing and that the holding blocks (4) are cast into the foundation (10).

3. Support for a bearing housing according to claim 1, characterised in that the foundation (10) consists of steel and the foundation plates (3) and holding blocks (4) are welded thereto.

4. Support for a bearing housing according to claim 1, characterised in that the engagement faces of the holding blocks (4) for the adjusting bolts (7) have a square shape.

5. Support for a bearing housing according to claim 1, characterised in that the foundation anchors (2) penetrate the foundation plates (3).

## Revendications

1. Support pour logement de palier d'une turbomachine, dans lequel le logement de palier (1) est supporté directement sur des fondations (10) par l'intermédiaire de plaques de fondation (3) sans plaque de base et est fixé au moyen d'ancrages de fondation (2), les plaques de fondation (3) étant pourvues d'éléments de réglage (6) pour l'orientation verticale du logement de palier (1), caractérisé en ce que les éléments de réglage verticaux (6) sont disposés audessus du niveau des fondations (10) et des blocs de retenue (4) prévus pour le réglage horizontal et la fixation du logement de palier (1) sont fixés dans les fondations (10), des éléments de fixation (5), qui s'étendent dans des évidements (8) prévus dans le dessous du logement de palier (1), étant prévus et des boulons de réglage (7) attaquant les éléments de fixation (5).

2. Support pour logement de palier suivant la revendication 1, caractérisé en ce que les fondations (10) sont en béton, les plaques de fondation (3) sont reliées aux fondations (10) par collage et les blocs de retenue (4) sont noyés dans les fondations (10).

3. Support pour logement de palier suivant la revendication 1, caractérisé en ce que les fondations (10) sont en acier et les plaques de fondation (3) ainsi que les blocs de retenue (4) y sont soudés.

4. Support pour logement de palier suivant la revendication 1, caractérisé en ce que les surfaces d'attaque des blocs de retenue (4) pour les boulons de réglage (7) sont de forme carrée.

5. Support pour logement de palier suivant la revendication 1, caractérisé en ce que les ancrages de fondation (2) traversent les plaques de fondation (3).

FIG.1

FIG.2a

FIG.2

FIG.3

0 026 947